# EUROPEAN PATENT APPLICATION

(11) **EP 2 983 116 A1**
(43) Date of publication of application: **10.02.2016**
(21) Application number: 14461558.0
(22) Date of filing: 08.08.2014
(51) Int. Cl.: G06Q 10/06, G06Q 30/06, G06Q 50/06, G06Q 30/02

(54) **Method and system for collecting commodity consumption data and method and system for generating an offer**

(71) Applicant: Lepszaoferta.PL S.A., 31-752 Krakow (PL)
(72) Inventor: Slowiakowski, Pawel, 31-752 Krakow (PL)
(74) Representative: Eupatent.pl

(57) **Abstract**

A computer-implemented method for collecting commodity consumption data using a computer-implemented system comprising: an input module (103) configured to receive commodity consumption data; a database (102) configured to store commodity consumption data; the method comprising the steps of: receiving (201) via the input module (103) commodity consumption data for at least one commodity and storing the data as at least one record in the database (102); generating (203) an individual consumption profile comprising at least the commodity consumption data in a predefined format.

A computer-implemented method for generating an offer using a computer-implemented system comprising an input module (103) configured to receive commodity consumption data; a database (102) configured to store commodity consumption data; an auction module (108) configured to conduct a reverse auction; the method comprising the steps of: collecting commodity consumption data to generate the individual consumption profile; conducting (204) a reverse auction via the auction module (108) to receive bids from suppliers for the individual consumption profile; generating (205) an offer to be presented to the consumer, the offer comprising data of at least one of the received bids.

## Description

### TECHNICAL FIELD

The present invention relates to methods and systems for collecting commodity consumption data and for generating an offer in order to optimize expenditures. In particular, the present invention relates to improving mechanisms used to handle reverse auction models on commodities.

### BACKGROUND

Typically, consumers of commodities such as energy, telecommunication, insurance, finance and other household services, pay separate bills to each supplier. This is not only inconvenient for the consumer due to the need of making a plurality of transactions, but it further does not allow to optimize the bills. There are known suppliers who offer a plurality of commodities in a combined offer, such as television, telephone and Internet access. However, there are no available mechanisms that would allow to compare such combined offers.

Moreover, there are no known mechanisms that would allow to conveniently gather data on consumption of various commodities by a consumer to present the needs of that consumer to a third party in a uniform manner. Moreover, there are no known mechanisms that would allow to conveniently present the consumer with a competitive offer for a plurality of commodities.

A reverse auction is a type of auction in which the roles of buyer and seller are reversed. In an ordinary auction (also known as a forward auction), buyers compete to obtain a good or service by offering increasingly higher prices. In a reverse auction, the sellers compete to obtain business from the buyer and prices will typically decrease as the sellers undercut each other. A reverse auction is similar to a unique bid auction as the basic principle remains the same, however a unique bid auction follows the traditional auction format more closely as each bid is kept confidential and one clear winner is defined after the auction finishes. In business, the term most commonly refers to a specific type of auction process (also called procurement auction, e-auction, sourcing event, e-sourcing or eRA, eRFP, e-RFO, e-procurement, B2B Auction) used in government or private sector procurement. In consumer auctions, the term is often used to refer to sales processes that share some characteristics with auctions, but are not necessarily auctions.

A PCT application WO2009111364 discloses a method and system of procuring energy for a consumer from a number of wholesale parties. The method includes preparing and conducting an event. Conducting the event includes registering the number of wholesale parties, providing for the reception and recording of a number of offers from the number of wholesale parties, receiving a number of best offers from the number of wholesale parties, providing a first display of the number of best offers to the number of wholesale parties, providing a second display of the number of best offers to the customer, and determining a number of final winning offers from the number of best offers. The method concludes with securing energy for the customer according to the number of final winning offers.

It would be thus advantageous to provide a system and method for conveniently gathering data on consumption of various commodities by a consumer to present the needs of that consumer to a third party in a uniform manner. Moreover, it would be advantageous to provide a system and method for generating an offer to optimize expenditures, which would be easy to use and flexible in terms of covered types of expenses.

### SUMMARY

There is presented a computer-implemented method for collecting commodity consumption data using a computer-implemented system comprising: an input module configured to receive commodity consumption data; a database configured to store commodity consumption data; the method comprising the steps of: receiving via the input module commodity consumption data for at least one commodity and storing the data as at least one record in the database ; generating an individual consumption profile comprising at least the commodity consumption data in a predefined format.

Preferably, the input module comprises at least one of: a scanner, a digital camera, a wired data interface, a wireless data interface, or a smartphone.

Preferably, data stored in the database comprises at least one of: consumer identification data, commodity, amount of commodity consumed, the period covered by the billing statement.

Preferably, the input module is configured to receive images of printed billing statements and the device further comprises an OCR module configured to convert image to text; wherein the method further comprises the step of extracting data from the received printed billing statements in the OCR module.

Preferably, the extracting of the input data from the received printed billing statements comprises comparing to other billing statements of that particular issuer, residing in the database as templates.

Preferably, the templates define location and description of context at certain locations on such a billing statement.

There is also presented a computer-implemented method for generating an offer using a computer-implemented system comprising an input module configured to receive commodity consumption data; a database configured to store commodity consumption data; an auction module configured to conduct a reverse auction; the method comprising the steps of: collecting commodity consumption data to generate the individual consumption profile; conducting a reverse auction via the auction module to receive bids from suppliers for the individual consumption profile; generating an offer to be presented to the consumer, the offer comprising data of at least one of the received bids.

Preferably, the method further comprises: generating an agreement based on the individual consumption profile and the offer selected by the consumer.

Preferably, the input module is comprised in a client device and the auction module is comprised in a server device.

There is also presented a computer program comprising program code means for performing all the steps of the presented computer-implemented method when said program is run on a computer, as well as a non-transitory computer readable medium storing computer-executable instructions performing all the steps of the presented computer-implemented method when executed on a computer.

There is further presented a system for collecting commodity consumption data, the system comprising: an input module configured to receive commodity consumption data; a database configured to store commodity consumption data; a controller configured to execute all steps of the presented method.

There is further presented a system for generating an offer, the system comprising: the system for collecting commodity consumption data; an auction module configured to conduct a reverse auction; wherein the controller is further configured to execute all steps of the presented method.

These and other objects of the invention presented herein are accomplished by providing systems and methods described herein.

### BRIED DESCRIPTION OF FIGURES

Further details and features of the present invention, its nature and various advantages will become more apparent from the following detailed description of the preferred embodiments shown in a drawing, in which:
Fig. 1 presents a diagram of the system for generating an offer;
Fig. 2 presents a diagram of the method for generating an offer;
Fig. 3 presents an exemplary content of an individual consumption profile of a consumer;
Fig. 4 presents a record of an offers database; and
Fig. 5A-E present exemplary screenshots of a thin-client terminal application software;
Fig. 6 presents an example of acquisition input data;
Fig. 7 presents an example of an auction mechanism;
Fig. 8 presents an example of optimization of consumption; and
Fig. 9 presents an example of verification of a joint offer.

### NOTATION AND NOMENCLATURE

Some portions of the detailed description which follows are presented in terms of data processing procedures, steps or other symbolic representations of operations on data bits that can be performed on computer memory. Therefore, a computer executes such logical steps thus requiring physical manipulations of physical quantities.

Usually these quantities take the form of electrical or magnetic signals capable of being stored, transferred, combined, compared, and otherwise manipulated in a computer system. For reasons of common usage, these signals are referred to as bits, packets, messages, values, elements, symbols, characters, terms, numbers, or the like.

Additionally, all of these and similar terms are to be associated with the appropriate physical quantities and are merely convenient labels applied to these quantities. Terms such as "processing" or "creating" or "transferring" or "executing" or "determining" or "detecting" or "obtaining" or "selecting" or "calculating" or "generating" or the like, refer to the action and processes of a computer system that manipulates and transforms data represented as physical (electronic) quantities within the computer's registers and memories into other data similarly represented as physical quantities within the memories or registers or other such information storage.

A computer-readable (storage) medium, such as referred to herein, typically may be non-transitory and/or comprise a non-transitory device. In this context, a non-transitory storage medium may include a device that may be tangible, meaning that the device has a concrete physical form, although the device may change its physical state. Thus, for example, non-transitory refers to a device remaining tangible despite a change in state.

The term "commodity" as used herein refers to various goods and services, such as energy, finance, telco and other home services/bills.

The term "consumption" as used herein refers to consumption or requirement or usage, depending on the type of commodity.

The names of particular goods and services which may appear on the drawings and which may be registered marks of third parties are used for illustrative purposes only.

### DETAILED DESCRIPTION

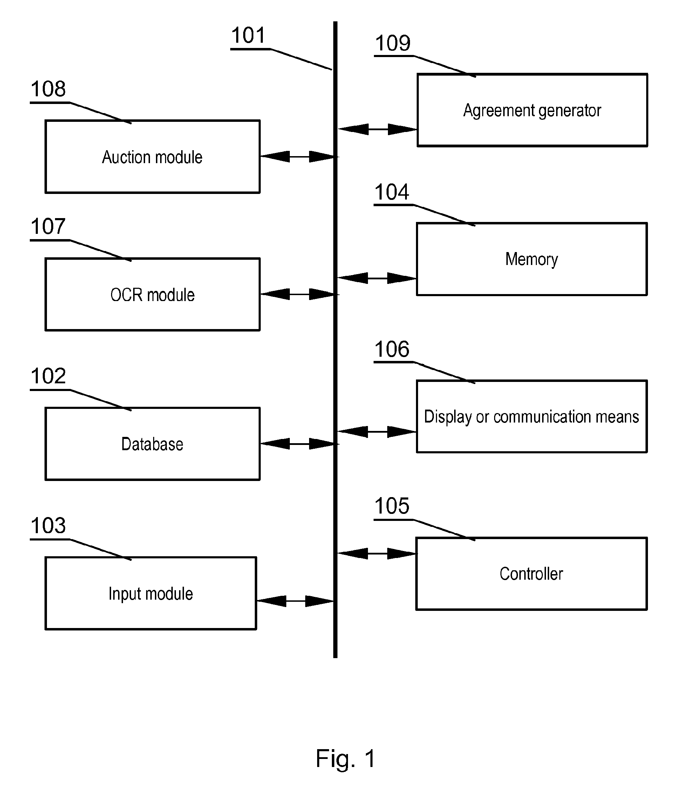

Fig. 1 presents a diagram of a system for collecting commodity consumption data and for generating an offer. The system can be stand alone system or a distributed system, wherein a central server executes the most time consuming tasks and global data storage, while thin clients are operated by users (consumers of commodities or agents who get into contact with consumers).

The system may be realized using dedicated components or custom made FPGA or ASIC circuits. The system comprises a data bus 101 communicatively coupled to a memory 104. Additionally, other components of the system are communicatively coupled to the system bus 101 so that they may be managed by a controller 105.

The memory 104 may store a computer program or programs executed by the controller 105 in order to execute steps of the method for generating an offer. The memory 104 may also store all temporary data, while all data provided to the system are ultimately stored in a database 102. The database 102 comprises information such as:
- commodity consumption data of a particular consumer;
- sellers of goods and services and information regarding the services and goods that those sellers offer (e.g. prices, properties, warranty terms, quality of service terms etc.);
- offers for customers received from auctions.

The system comprises an input module 103 configured to receive data on commodity consumption, such as a past consumption which can be a predicate on desired user consumption in future. For example, the input module 103 may be a scanner or a smartphone camera to scan a printed billing statement for further recognition of its content by an OCR module, or to scan a fragment of the billing statement, such as a number identifier or a code (such as barcode, QR code or AZTEC code), to allow to gather data related to the statement from an external database. For example, after reading a code from a car registration document, the car details (make, model, production year, mileage) may be read from an external database to be used for setting up an auction for car insurance. The input module 103 may also be a data interface, such as a wired interface (e.g. USB, Ethernet) or wireless interface (e.g. Bluetooth, WiFi), to read data from an external device, such as a smart home meter, such as an electricity meter. Further, the input module 103 may be configured to measure commodity consumption itself, for example it may test the speed of the current Internet link of the user (to generate an offer for Internet link of a particular speed), or it may read particular data from a commodity-utilizing device and calculate the commodity consumption based on that data (for example, a monthly demand for phone consumption (calculated e.g. in minutes of talking time) may be calculated or at least estimated based on history of phone connections available at the telephone). The input module 103 can be located at a thin client device, for example a mobile device, such as a mobile scanner or a smartphone with a camera.

Further, the system comprises an Optical Character Recognition (OCR) module 107 for processing the input billing statement. Such OCR module may reside either at the thin client device or at a central server. Alternatively, some data (such as QR codes) may be recognized at the thin client device application and other data (such as all other text) may be recognized at the server. Data is extracted from billing statement, such as information identifying the consumer (e.g. name, address), the goods, the amount of goods and the period to which the billing statement refers. In order to improve recognition efficiency, the input billing statement may be compared to other billing statements of that particular issuer, which may reside in the database 102 as templates that for example define location and description of context at certain locations on such a billing statement. In case the issuer of the input billing statement is not recognized, typical keyword-based search may be executed in the input data subject to OCR process. The data extracted from such billing statements may subsequently be used as input to an auction module 108.

The auction module 108 is preferably a reverse auction system, wherein the sellers are bidding for a buyer. The auction module 108 is preferably implemented on a remote server to handle multiple transactions and multiple users while providing high accessibility. For example, such auction module 108 may be implemented as a World Wide Web service. Such Web service includes software for generating web pages, software for querying the database 102 and for updating the database 102. The auction module 108 may be accessible by commodity suppliers directly or via external service providers, such as affiliation sites.

When the controller 105 receives a result of the auction, it may proceed to generate an offer for the consumer and to conclude an agreement between the consumer and the lowest bidder after the consumer has accepted the optimization of expenditures. In order to do that, the system further comprises an agreement generator 109. The generated agreement is provided to the buyer for signature via electronic means (using electronic signature) or traditionally (in printed form) via post services.

The system further comprises a display and/or communication means 106 in order to communicate with the user, e.g. via the thin client device. For example the communication interface may be a WiFi interface and the display may be a touch screen of the thin client device for accepting user input.

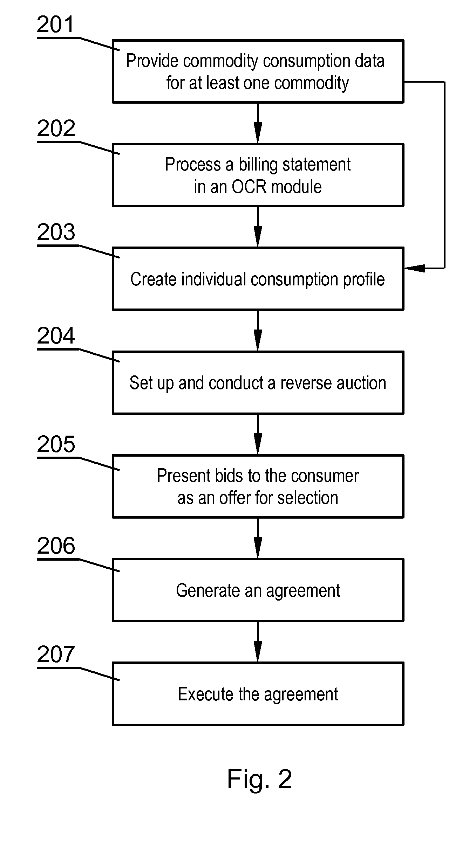

Fig. 2 presents a diagram of the method according to the present invention. The method starts in step 201 by receiving from the consumer (user) commodity consumption data for at least one commodity via the input module 103. Commodity consumption data may be provided directly by the consumer or by an agent (a salesman). The consumption data may be supplemented with supplementary data. For example, electricity consumption data (such as average monthly consumption in kWh, peak consumption hours,) may be supplemented by supplementary data on the number of persons in a household, e-mail address, geographical localization, customer identification data. The data on vehicle fuel consumption (such as average monthly consumption in liters) may be supplemented by driver data (age, driving experience) or vehicle data (make, model, registration date, engine type). Mobile connectivity demand data (such as number of calls made per month, average call duration, total durations of calls dialed or answered) may be supplemented by call logs, most frequently called numbers, etc. If a combined offer (i.e. an offer related to a plurality of commodities) is to be generated for the user, then data on consumption of at least two commodities is read in step 201, for example by sequentially reading two billing statements related to different commodities, e.g. gas and electricity. Furthermore, data related to different commodities may be read in a different manner, e.g. electricity consumption may be read from an electricity meter via a wireless interface, water consumption may be read from a water billing statement and data related to Internet data transfer demand may be read by communicating with the Internet access device, e.g. a home wireless router. The data is stored as at least one record in the database 102.

In case the input data received in step 201 included a scan of a billing statement, it is passed in step 202 to the OCR module 107 for processing. The scans of billing statement(s) may for example be transmitted using http protocol in base64 format to be processed by the OCR module 107 residing at a remote server. The OCR module extracts data from the billing statement and stores it in the database 102. For example, in case of electricity billing statement, the following information may be extracted: amount of electricity consumed, tariff, current supplier, current price, ID (or type) of electricity measuring device, address (as a street number and city or as geographical coordinates (e.g. GPS coordinates)).

The commodity consumption data is stored in the converted to an individual consumption profile in step 203. The individual consumption profile has a predefined format and comprises at least the commodity consumption data and may comprise combined consumption data on a plurality of commodities and at least some of supplementary data. The use of a predefined format for the consumption profile allows to present the profile of various users, currently obtaining commodities of the same type from various suppliers, to a plurality of potential new suppliers in a uniform manner, allowing to collect comparable bids for that consumption profile.

Next, the individual consumption profile is passed to the auction module 108, which sets up a reverse auction offer and conducts the auction for that consumption profile in step 204. During the auction, bidders (suppliers of goods and services) compete to place the lowest offer (or an offer most attractive in terms other than price). The bidders provide their offers manually or automatically. The automatic bidding can be based on detailed parameters of service the bidder provides taking into account the location of the potential buyer. Furthermore, the bids may include standard, non-customized offers, provided by the suppliers as a bid to the reverse auction or generated by the system automatically as a bid based on predefined offer templates.

In step 205 an offer, comprising the received bids (or the best bid), is generated and presented to the user, who selects the preferred bid and indicates a desire to conclude an agreement.

Subsequently, at step 206, the system creates an agreement between the consumer and the selected supplier using agreement template and commodity consumption data. This step is executed by the agreement generator 109, which preferably resides on the remote server.

Next, at step 207, the agreement is executed, which may take place in a traditional or electronic way depending on requirements of a given bidder. The accounting system records the execution of the agreement and passes it to the bidder. The system may collect commission from the bidder. The commission may be split between the agent (in case an agent has been involved in the optimization of expenditures process) and the buyer (in case the user initiated the optimization of expenditures).

As a result, the consumer obtains, in a convenient and efficient way, an offer including analysis of current expenses and a proposal for optimization. The offer may be closely fit to the needs of the user, for example in case of electricity the system may determine peak and off-peak consumption and automatically identify the best tariffs, calculate savings and optionally suggests installing additional renewable energy sources.

In case of a system used only for collecting commodity consumption data, the modules 108, 109 are not necessary and the controller 105 is configured to perform steps 201-203 of the method of Fig. 2.

Once commodity consumption data is collected, an offer may be generated for the customer directly, in case the data is provided to the commodity supplier. Therefore, in order to directly generate an offer for consumer, the steps 201-203 and 206-207 may be performed, and a customized offer may be presented to the user for acceptance between steps 203 and 206.

In case the system is to be used to present the user with offers of a plurality of suppliers, the system used for generating an offer may comprise all modules of Fig. 1 and the controller 105 can be configured to further perform at least steps 204, 205 of the method of Fig. 2 (therefore, including the reverse auction) and optionally steps 206, 207.

In order to generate a reverse auction, an individual consumption profile for a consumer is created. Such profile preferably includes all expenses of the consumer extracted from the commodity consumption data. The expenses are then categorized and allow for application of joint offers such as banking combined with insurance or electricity combined with gas, which may be more cost efficient that the same offers when not joined together.

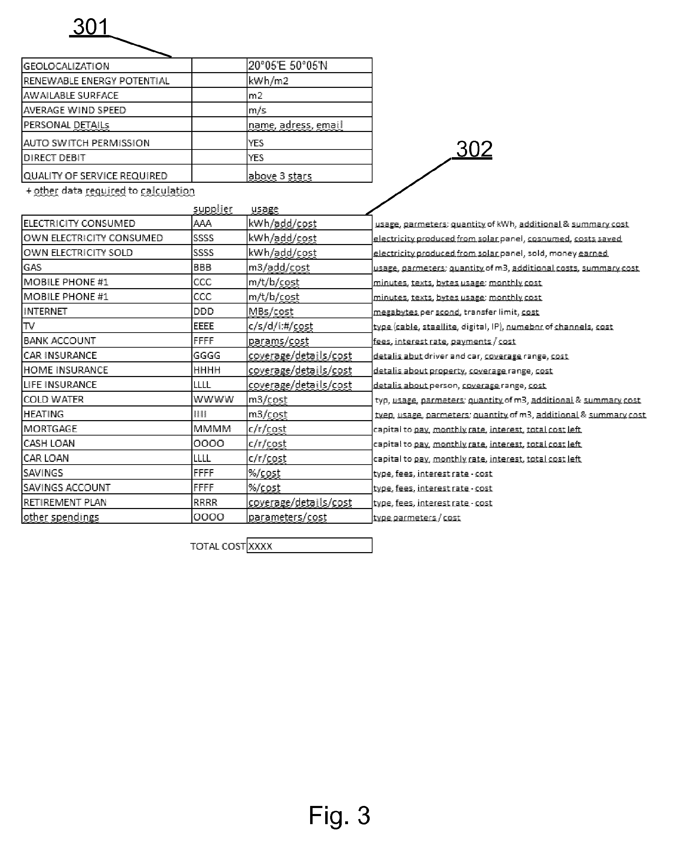

Fig. 3 presents an exemplary content of an individual consumption profile of a consumer. Data provided in section 301 may be collected automatically or directly provided by a client in addition to data obtained from the commodity consumption data, such as billing statement(s) 302. Such profiles may be stored in the database 102.

As may be seen in Fig. 3, the profile includes information regarding renewable energy potential at a given location. The system may employ a global irradiation and solar electricity potential map optionally including wind and weather data in order to determine a renewable energy potential (for example in kW/h per m²) for a given location. In case the potential is high, the consumer may be provided with an offer that would include utilization of renewable energy.

All or at least part of the following data may be stored in the user consumption profile:
- ELECTRICITY CONSUMED, supplier, usage: kWh/add/cost: usage, parameters: quantity of kWh, additional & summary cost;
- OWN ELECTRICITY CONSUMED, supplier, usage: kWh/add/cost: electricity produced from solar panel, consumed, costs saved;
- OWN ELECTRICITY SOLD, supplier, usage: kWh/add/cost: electricity produced from solar panel, sold, money earned;
- GAS, supplier, usage: m3/add/cost: usage, parameters: quantity of m3, additional costs, summary cost;
- MOBILE PHONE #1, supplier, usage: m/t/b/cost: minutes, texts, bytes usage: monthly cost;
- MOBILE PHONE #2, supplier, usage: m/t/b/cost: minutes, texts, bytes usage: monthly cost
- INTERNET, supplier, usage: MBs/cost: megabytes per second, transfer limit, cost;
- TV, supplier, usage: c/s/d/i:#/cost: type (cable, satellite, digital, IP), number of channels, cost
- BANK ACCOUNT, supplier, usage: params/cost: fees, interest rate, payments / cost;
- CAR INSURANCE, supplier, usage: coverage/details/cost: details abut driver and car, coverage range, cost;
- VEHICLE DETAILS: vehicle registration number, B date of first registration of the vehicle, C data on the registration holder and owner of the vehicle include a printout of the following codes and information: C.1.1 name or the name of the holder of the registration certificate [a], C.1.2 social security number or company registration number, C.1.3 address of the holder of the registration certificate, C.2.1 name or the name of the owner of the vehicle, C.2.2 social security number or company registration number, C.2.3 address of the owner of the vehicle, D data on the vehicle include print the following codes and information: D.1 make of vehicle, D.2 type of vehicle: - A variant, if any, - Version, if any, D.3 vehicle model, E vehicle identification number (VIN or chassis number, chassis or frame), F.1 maximum gross vehicle weight [b], excluding motorcycles and mopeds (in kg), F.2 permissible gross vehicle weight (kg), F.3 permissible mass of the vehicle (kg), G curb weight of the vehicle; in the case of a towing vehicle of category other than M1 curb weight includes a coupling device (kg), H period of validity evidence, if there is such a restriction, the date of issue of the registration certificate, J vehicle category, K the number of vehicle type approval certificate, if any, L number of axles, O.1 maximum gross trailer weight braked (kg), 0.2 maximum gross trailer weight unbraked (kg), P.1 engine capacity (in cm3), P.2 maximum net power (in kW), P.3 fuel [c], Q power to weight ratio on its own (in kW / kg); applies to motorcycles and mopeds, S.1 number of seats, including the driver's seat, S.2 number of standing places, if any;
- HOME INSURANCE, supplier, usage: coverage/details/cost: details about property, coverage range, cost;
- LIFE INSURANCE, supplier, usage: coverage/details/cost: details about person, coverage range, cost;
- COLD WATER, supplier, usage: m3/cost: type, usage, parameters: quantity of m3, additional & summary cost;
- HEATING, supplier, usage: m3/cost: type, usage, parameters: quantity of m3, additional & summary cost;
- MORTGAGE, supplier, usage: c/r/cost: capital to pay, monthly rate, interest, total cost left;
- CASH LOAN, supplier, usage: c/r/cost: capital to pay, monthly rate, interest, total cost left;
- CAR LOAN, supplier, usage: c/r/cost: capital to pay, monthly rate, interest, total cost left;
- SAVINGS, supplier, usage: %/cost: type, fees, interest rate - cost;
- SAVINGS ACCOUNT, supplier, usage: %/cost: type, fees, interest rate - cost;
- RETIREMENT PLAN, supplier, usage: coverage/details/cost: type, fees, interest rate - cost;
- other spendings, supplier, usage: parameters/cost: type parameters / cost.

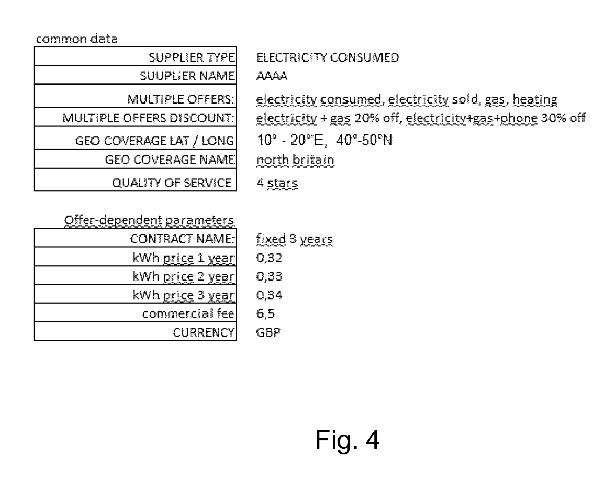

Fig. 4 presents an exemplary record of an offers database 102. As previously explained, information about a supplier includes possibilities of joint offers and discounts related to such offers.

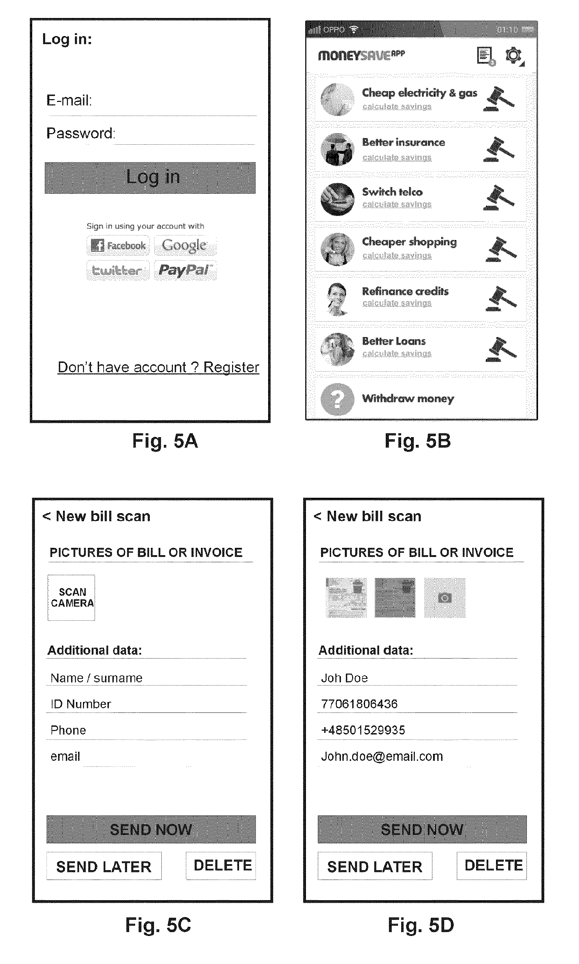

Fig. 5A-5E present exemplary screenshots of a thin-client terminal application software used to input the commodity consumption data, such as billing statement(s), and initiate all subsequent processing according to the present invention. As shown in Fig. 5A, a user may have a personalized account at the remote server, to manage the user's consumption profile. As shown in Fig. 5B, the system may offer optimization of savings of various commodities, such as combined commodities (e.g. electricity and gas), insurance services, telecom operators, shopping, credit refinance, loans etc. Fig. 5C presents an interface for capturing a scan of a bill or invoice, and Fig. 5D presents the interface after a number of scans were made - data about the user may be entered manually or read automatically from the scanned documents.

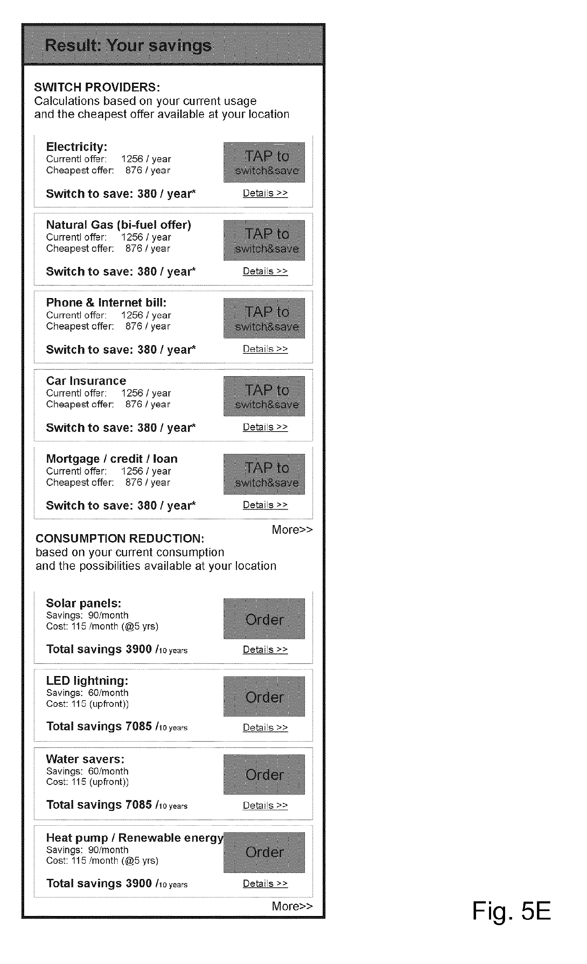

Fig. 5E presents an example of an interface for presenting a generated offer to the user, based on consumption of a plurality of commodities: electricity, natural gas, phone & internet, car insurance and mortgage loans. It compares the current spendings (read from user's commodity consumption data) with the best bids offered on the reverse auction by commodity suppliers. A user may select the commodity to be optimized and proceed to generate and sign an agreement to change the supplier. Furthermore, Fig. 5E shows the user a plurality of options to reduce spendings by installing additional equipment, such as solar panels, LED lighting, water savers or heat pump. The user may select a product and proceed to generate and sign an agreement to install the product.

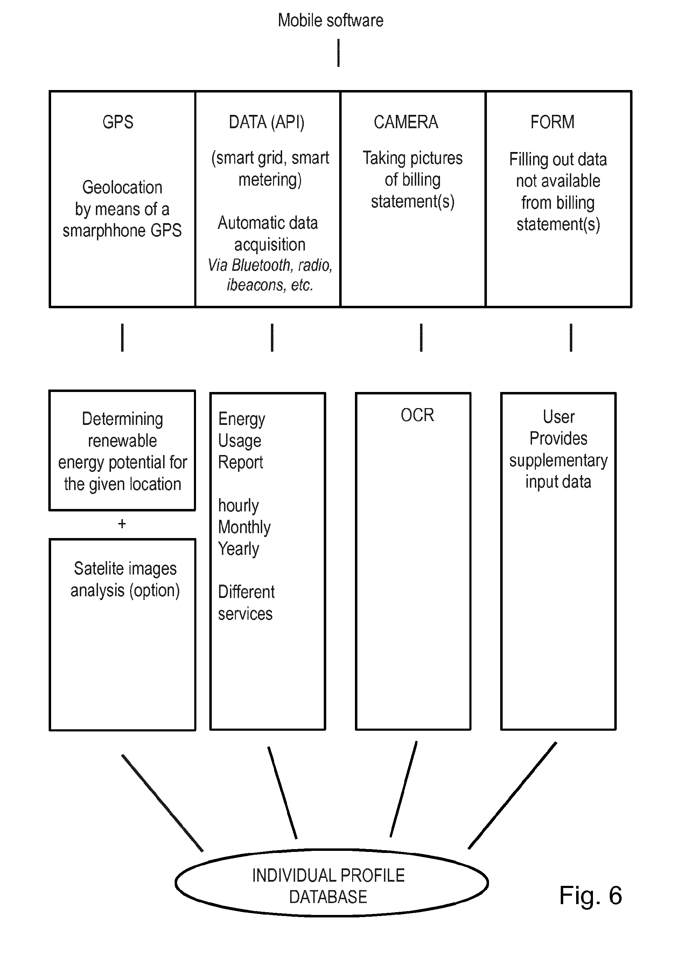

Fig. 6 presents an example of input data acquisition. In this case, a smartphone equipped with a digital camera and a geolocalization module (such as a GPS receiver) is used together with a suitable software application installed in order to coordinate data acquisition process. As can be seen, also smart grid and smart metering systems may be queried in order to facilitate automatic data acquisition. Based on geolocation also satellite maps and images may be used in order to determine building(s) type(s) on the property, estimated area of solar cells which leads to a report on renewable energy potential report.

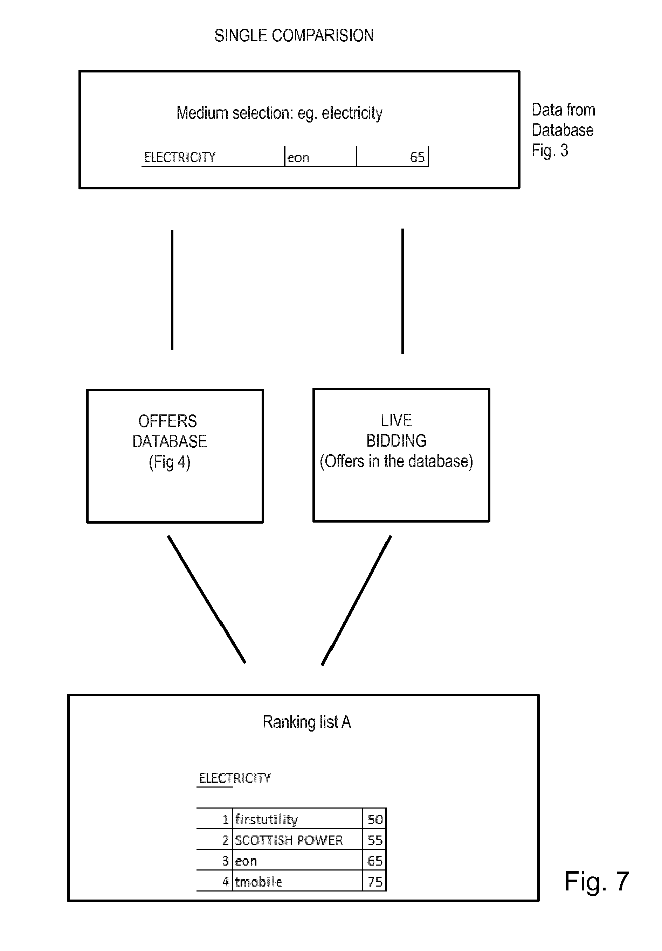

Fig. 7 presents an example of auction mechanism. This is a simple comparison of offers stored in the database 102. Selected offers are provided as a result to a potential buyer.

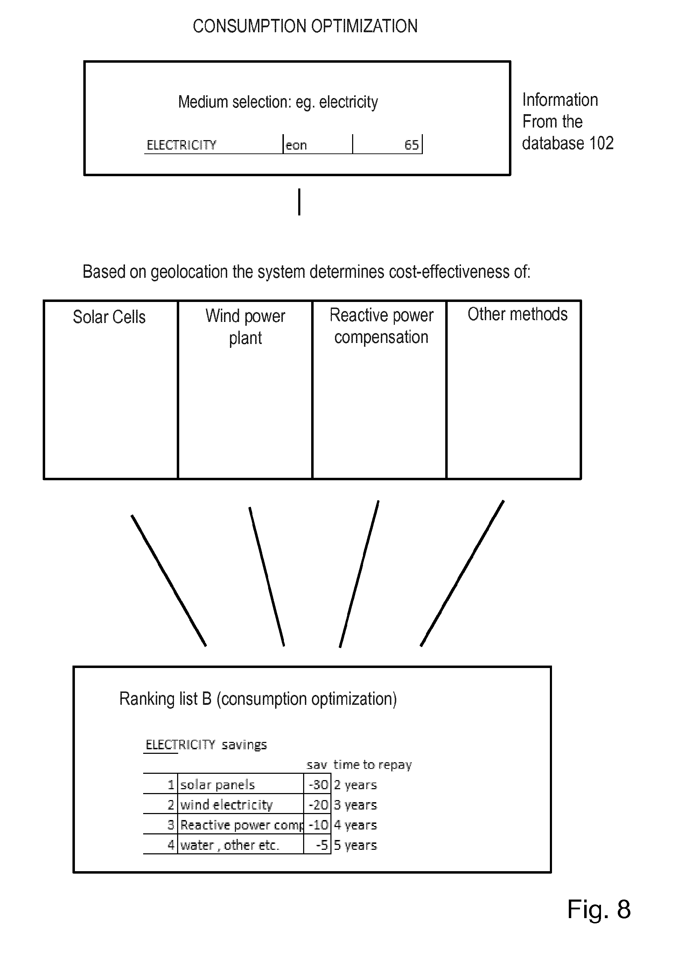

Fig. 8 presents an example of consumption optimization. Based on geolocation the system verifies cost-effectiveness of different approaches to renewable energy use. Solar cells may be considered based on solar maps, building type and area. Alternatively, wind power plant may be considered based on wind data. Alternatively, reactive power compensation may be applied by determining which batteries may be applied in order to optimize electricity consumption. Other methods may include water plants, heat pump etc.
The calculated cost-effectiveness of different approaches to renewable energy use is presented to a user.

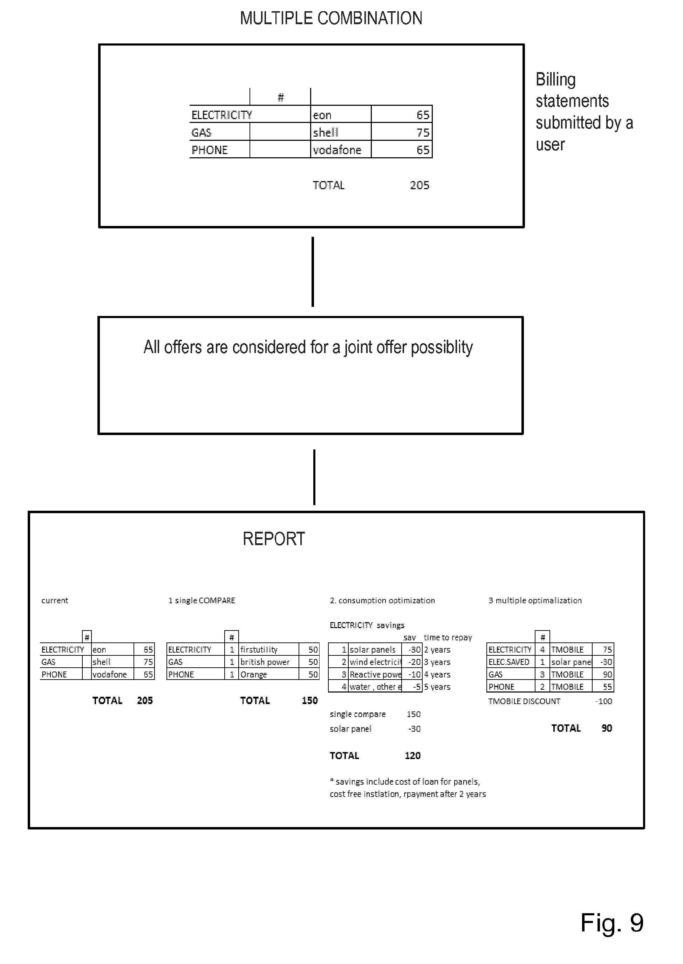

Fig. 9 presents an example of joint offer verification. There may be a case where a joint offer exists provided by a single provided who offers competitive prices due to linking of offers together.

The embodiments depicted in Fig. 7, Fig.8 and Fig. 9 may be combined in order to provide a complete analysis, for example in a form of a report shown in Fig. 9.

From the above description it is clear that the method according to the present invention is implemented with a particular machine, that is, one specifically devised and adapted to carry out the process in a way that is not conventional and is not trivial. Further the method transforms an article of a billing statement from one or state to another, which is a set of bids related to a given service.

The result of the execution of the method according to the present invention is a useful, concrete and tangible result i.e. efficient management of expenditures. Therefore, the invention provides a useful, concrete and tangible result.

It can be easily recognized, by one skilled in the art, that the aforementioned method for generating an offer to optimize expenditures may be performed and/or controlled by one or more computer programs. Such computer programs are typically executed by utilizing the computing resources in a computing device. Applications are stored on a non-transitory medium. An example of a non-transitory medium is a non-volatile memory, for example a flash memory or volatile memory, for example RAM. The computer instructions are executed by a processor. These memories are exemplary recording media for storing computer programs comprising computer-executable instructions performing all the steps of the computer-implemented method according the technical concept presented herein.

While the invention presented herein has been depicted, described, and has been defined with reference to particular preferred embodiments, such references and examples of implementation in the foregoing specification do not imply any limitation on the invention. It will, however, be evident that various modifications and changes may be made thereto without departing from the broader scope of the technical concept. The presented preferred embodiments are exemplary only, and are not exhaustive of the scope of the technical concept presented herein.

Accordingly, the scope of protection is not limited to the preferred embodiments described in the specification, but is only limited by the claims that follow.

## Claims

1. A computer-implemented method for collecting commodity consumption data using a computer-implemented system comprising:
- an input module (103) configured to receive commodity consumption data;
- a database (102) configured to store commodity consumption data;
the method comprising the steps of:
- receiving (201) via the input module (103) commodity consumption data for at least one commodity and storing the data as at least one record in the database (102);
- generating (203) an individual consumption profile comprising at least the commodity consumption data in a predefined format.

2. The method according to claim 1 wherein the input module (103) comprises at least one of: a scanner, a digital camera, a wired data interface, a wireless data interface or a smartphone.

3. The method according to claim 1 wherein data stored in the database (102) comprises at least one of: consumer identification data, commodity, amount of commodity consumed, the period covered by the billing statement.

4. The method according to claim 1, wherein the input module (103) is configured to receive images of printed billing statements and the device further comprises an OCR module (107) configured to convert image to text; wherein the method further comprises the step of extracting (202) data from the received printed billing statements in the OCR module (107).

5. The method according to claim 4 wherein the extracting of the input data from the received printed billing statements comprises comparing to other billing statements of that particular issuer, residing in the database (102) as templates.

6. The method according to claim 4 wherein the templates define location and description of context at certain locations on such a billing statement.

7. A computer-implemented method for generating an offer using a computer-implemented system comprising
- an input module (103) configured to receive commodity consumption data;
- a database (102) configured to store commodity consumption data;
- an auction module (108) configured to conduct a reverse auction;
the method comprising the steps of:
- collecting commodity consumption data according to claim 1 to generate the individual consumption profile;
- conducting (204) a reverse auction via the auction module (108) to receive bids from suppliers for the individual consumption profile;
- generating (205) an offer to be presented to the consumer, the offer comprising data of at least one of the received bids.

8. The method according to claim 7, further comprising:
- generating (206) an agreement based on the individual consumption profile and the offer selected by the consumer.

9. The method according to claim 7 wherein the input module (103) is comprised in a client device and the auction module (108) is comprised in a server device.

10. A computer program comprising program code means for performing all the steps of the computer-implemented method according to any of claims 1-9 when said program is run on a computer.

11. A non-transitory computer readable medium storing computer-executable instructions performing all the steps of the computer-implemented method according to any of claims 1-9 when executed on a computer.

12. A system for collecting commodity consumption data, the system comprising:
- an input module (103) configured to receive commodity consumption data;
- a database (102) configured to store commodity consumption data;
- a controller (105) configured to execute all steps of the method according to claim 1.

13. A system for generating an offer, the system comprising:
- the system for collecting commodity consumption data according to claim 12;
- an auction module (108) configured to conduct a reverse auction;
- wherein the controller (105) is further configured to execute all steps of the method according to claim 7.
